# EUROPEAN PATENT APPLICATION

(11) **EP 4 793 925 A1**
(43) Date of publication of application: **19.08.2026**
(21) Application number: 25222675.8
(22) Date of filing: 11.12.2025
(51) Int. Cl.: G08G 5/34, G08G 5/54, G08G 5/55, G08G 5/58, G01C 23/00

(54) **MANAGEMENT OF A CRITICAL DESCENT FLIGHT PATH FOR AN AIRCRAFT**

(30) Priority: 13.02.2025 US 202519053069
(71) Applicant: Honeywell International s.r.o, 148 00 Chodov (CZ)
(72) Inventor: POLCAK, Marek, Charlotte, 28202 (US); FOLTAN, Stanislav, Charlotte, 28202 (US)
(74) Representative: Ingrassia, Fisher & Lorenz UK Ltd.

(57) **Abstract**

A method and system for determining a critical descent flight path limit for an aircraft has been developed. First, a proposed change to a flight plan for an aircraft is received from air traffic control (ATC). The current location and current energy state of the aircraft is determined by a flight management system (FMS) of the aircraft. The current energy state of the aircraft is the aircraft's current altitude and speed. Multiple modified flight descent paths are constructed with the FMS to find a critical descent flight path limit which respects a proposed change from the ATC or the constrains from the active flight plan. Critical descent flight path limit is then displayed to a pilot, who has to evaluate the flyability based on the aircraft and critical descent flight path limit positions.

## Description

### STATEMENT REGARDING FEDERALLY SPONSORED RESEARCH OR DEVELOPMENT

The project leading to this application has received funding from the SESAR Joint Undertaking under Grant Agreement No. 101114736 under European Union's Horizon 2022 Research and Innovation Program.

### TECHNICAL FIELD

The present invention generally relates to aircraft avionics operations, and more particularly relates to management of a critical descent flight path for an aircraft.

### BACKGROUND

Air traffic management often propose a flight plan change (*e.g.,* a shortcut) for a predefined procedure to improve aircraft sequencing on approach. Such a change is often intended to improve aircraft sequencing on approach. However, it is often problematic since it shortens the distance for descent and it may not be enough to dissipate the energy of the aircraft. After the Air Traffic Control (ATC) proposal, the pilot must evaluate the situation and decided how to proceed. However, there are limited supporting tools, which would help him to decide if the proposed flight plan change is flyable. Hence, there is a need for a method and system for management of a critical descent flight path for an aircraft,

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for determining a critical descent flight path limit for an aircraft. Critical descent is a limiting profile segment, which considers maximal drag configuration (per aircraft type) and which secures complying with constraints and stability at final approach fix (FAF). The method comprises: receiving a proposed change to a flight path descent path for an aircraft, where the proposed change is received from air traffic control (ATC); determining a current location and current energy state of the aircraft, where the current energy state of the aircraft comprises the aircraft's current altitude and speed as determined by a flight management system (FMS) of the aircraft; constructing multiple flight descent paths with the FMS to find the critical descent flight path limit for the proposed change from the ATC. Critical descent flight path limit is then displayed to a pilot, who has to evaluate the flyability with respect to aircraft position. If the critical descent flight path limit for the closest constraint is behind the aircraft, process of finding critical descent flight path limit is computed for the next constraining constraint or FAF.

A system is provided for determining a critical descent flight path limit for an aircraft. The system comprises: a flight management system (FMS) located onboard the aircraft, where the FMS, receives a proposed change to a flight path descent path for an aircraft, where the proposed change is received from air traffic control (ATC), determines a current location and current energy state of the aircraft, where the current energy state of the aircraft comprises the aircraft's current altitude and speed as determined by the FMS, constructs multiple flight descent paths with the FMS to find the critical descent flight path limit; and a flight display system located onboard the aircraft, where the flight display system, displays critical descent flight path limit to a pilot of the aircraft.

Furthermore, other desirable features and characteristics of the disclosed embodiments will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a diagram of aircraft computer system, in accordance with the disclosed embodiments;
FIG. 2 is a functional block diagram of a computing device, in accordance with the disclosed embodiments;
FIG. 3 depicts an exemplary embodiment of an aircraft system suitable for implementation onboard an aircraft shown previously in FIG. 1;
FIG. 4 depicts a diagram of a descent path for an aircraft with a proposed change in accordance with the disclosed embodiments;
FIGS. 5A and 5B depict diagrams of a critical descent path and a critical descent path overshoot for an aircraft with a critical descent point in accordance with the disclosed embodiments;
FIGS. 6A and 6B depict diagrams of an accepted and rejected critical descent path for an aircraft with a critical descent point in accordance with the disclosed embodiments;
FIG. 7 depicts a diagram of a critical descent path with a missed critical descent point and new critical descent point in accordance with the disclosed embodiments;
FIG. 8 depicts a diagram of a critical descent path for an aircraft with a critical descent point using FAF/gate stability focus in accordance with the disclosed embodiments; and
FIG. 9 shows a flowchart for method for determining a critical descent flight path limit for an aircraft has been developed in accordance with disclosed embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for determining a critical descent flight path limit for an aircraft has been developed. First, a proposed change to a flight path descent path for an aircraft is received from air traffic control (ATC). The current location and current energy state of the aircraft is determined by a flight management system (FMS) of the aircraft. The current energy state of the aircraft is the aircraft's current altitude and speed. Multiple modified flight descent paths are plotted with the FMS to comply with the proposed change from the ATC. Each modified flight descent path is categorized as flyable or unflyable with the FMS. The pilot of the aircraft is then notified if a modified flight descent path is unflyable.

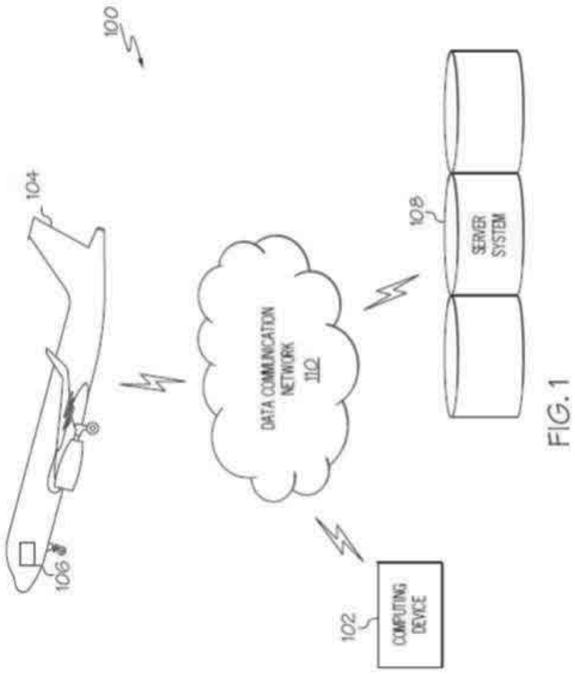

Turning now to the figures, FIG. 1 is a diagram of aircraft computer system 100, in accordance with the disclosed embodiments. The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing Electronic Flight Bag (EFB) applications. In other embodiments, the computing device 102 may be implemented using a computer system onboard the aircraft 104.

The aircraft 104 may be implemented as an airplane, helicopter, spacecraft, hovercraft, or the like. The one or more avionics systems 106 may include a Flight Management System (FMS), navigation devices, weather detection devices, radar devices, communication devices, brake systems, and/or any other electronic system or avionics system used to operate the aircraft 104. Data obtained from the one or more avionics systems 106 may include, without limitation: flight data, aircraft heading, aircraft speed, aircraft position, altitude, descent rate, position of air spaces surrounding a current flight plan, activity of air spaces surrounding a current flight plan, or the like.

The server system 108 may include any number of application servers, and each server may be implemented using any suitable computer. In some embodiments, the server system 108 includes one or more dedicated computers. In some embodiments, the server system 108 includes one or more computers carrying out other functionality in addition to server operations. The server system 108 may store and provide any type of data. Such data may include, without limitation: flight plan data, aircraft parameters, avionics data and associated user actions, and other data compatible with the computing device 200.

The computing device 102 is usually located onboard the aircraft 104, and the computing device 102 communicates with the one or more avionics systems 106 via wired and/or wireless communication connection. The computing device 102 and the server system 108 may both be located onboard the aircraft 104. In other embodiments, the computing device 102 and the server system 108 may be disparately located, and the computing device 102 communicates with the server system 108 via the data communication network 110 and/or via communication mechanisms onboard the aircraft 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

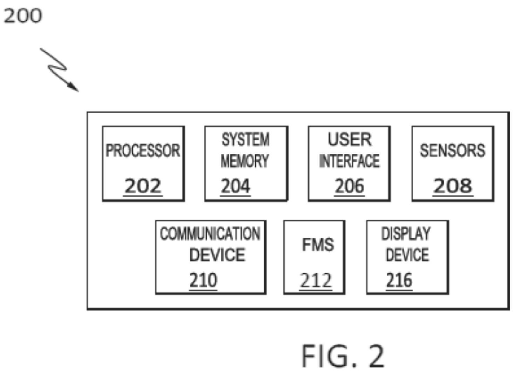

FIG. 2 is a functional block diagram of a computing device 200, in accordance with the disclosed embodiments. It should be noted that the computing device 200 can be implemented with the computing device 102 depicted in FIG. 1. In this regard, the computing device 200 shows certain elements and components of the computing device 102 in more detail.

The computing device 200 generally includes, without limitation: a processor 202; system memory 204; a user interface 206; a plurality of sensors 208; a communication device 210; a flight management system (FMS) 212; and a display device 216. These elements and features of the computing device 200 may be operatively associated with one another, coupled to one another, or otherwise configured to cooperate with one another as needed to support the desired functionality. For ease of illustration and clarity, the various physical, electrical, and logical couplings and interconnections for these elements and features are not depicted in FIG. 2. Moreover, it should be appreciated that embodiments of the computing device 200 will include other elements, modules, and features that cooperate to support the desired functionality. For simplicity, FIG. 2 only depicts certain elements that are described in more detail below.

The processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the processor 202 may be realized as one or more microprocessors, controllers, microcontrollers, or state machines. Moreover, the processor 202 may be implemented using any suitable processing system, such as one or more processors, controllers, microprocessors, microcontrollers, processing cores and/or other computing resources spread across any number of distributed or integrated systems, including any number of "cloud-based" or other virtual systems.

The processor 202 is communicatively coupled to the system memory 204 or other suitable "non-transitory computer-readable storage medium". The system memory 204 is configured to store any obtained or generated data associated with generating alerts to redirect user attention from the computing device 200 to a critical or high-priority flight situation. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the processor 202 such that the processor 202 can read information from, and write information to, the system memory 204. In the alternative, the system memory 204 may be integral to the processor 202. As an example, the processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 200. For example, the user interface 206 could be manipulated by an operator to provide flight data parameters during the operation of electronic flight bag (EFB) applications, as described herein.

In certain embodiments, the user interface 206 may include or cooperate with various features to allow a user to interact with the computing device 200 via graphical elements rendered on a display element (e.g., the display device 216). Accordingly, the user interface 206 may initiate the creation, maintenance, and presentation of a graphical user interface (GUI). In certain embodiments, the display device 216 implements touch-sensitive technology for purposes of interacting with the GUI. Thus, a user can manipulate the GUI by moving a cursor symbol rendered on the display device 216, or by physically interacting with the display device 216 itself for recognition and interpretation, via the user interface 206.

The plurality of sensors 208 is configured to obtain data associated with active use of the computing device 200, and may include, without limitation: touchscreen sensors, accelerometers, gyroscopes, or the like. Some embodiments of the computing device 200 may include one particular type of sensor, and some embodiments may include a combination of different types of sensors. Generally, the plurality of sensors 208 provides data indicating whether the computing device 200 is currently being used. Touchscreen sensors may provide output affirming that the user is currently making physical contact with the touchscreen (e.g., a user interface 206 and/or display device 216 of the computing device 200), indicating active use of the computing device. Accelerometers and/or gyroscopes may provide output affirming that the computing device 200 is in motion, indicating active use of the computing device 200.

The communication device 210 is suitably configured to communicate data between the computing device 200 and one or more remote servers and one or more avionics systems onboard an aircraft. The communication device 210 may transmit and receive communications over a wireless local area network (WLAN), the Internet, a satellite uplink/downlink, a cellular network, a broadband network, a wide area network, or the like. As described in more detail below, data received by the communication device 210 may include, without limitation: avionics systems data and aircraft parameters (e.g., a heading for the aircraft, aircraft speed, altitude, aircraft position, ascent rate, descent rate, a current flight plan, a position of air spaces around a current flight plan, and activity of the air spaces around a current flight plan), and other data compatible with the computing device 200. Data provided by the communication device 210 may include, without limitation, requests for avionics systems data, alerts and associated detail for display via an aircraft onboard display, and the like.

The FMS 212, as is generally known, is a specialized computer that automates a variety of in-flight tasks such as in-flight management of the flight plan. Using various sensors such as global positioning system (GPS), the FMS 212 determines the aircraft's position and guides the aircraft along its flight plan using its navigation database. From the cockpit, the FMS 212 is normally controlled through a visual display device such as a control display unit (CDU) which incorporates a small screen, a keyboard or a touchscreen. The FMS 212 displays the flight plan and other critical flight data to the aircrew during operation.

The FMS 212 may have a built-in electronic memory system that contains a navigation database. The navigation database contains elements used for constructing a flight plan. In some embodiments, the navigation database may be separate from the FMS 212 and located onboard the aircraft while in other embodiments the navigation database may be located on the ground and relevant data provided to the FMS 212 via a communications link with a ground station. The navigation database used by the FMS 212 may typically include: waypoints/intersections; airways; radio navigation aids/navigation beacons; airports; runway; standard instrument departure (SID) information; standard terminal arrival (STAR) information; holding patterns; and instrument approach procedures. Additionally, other waypoints may also be manually defined by pilots along the route.

The FMS database may be a repository or other data storage system capable of storing and managing the data associated with any number of applications. The database may be implemented using conventional database server hardware. In various embodiments, the database shares processing hardware with a separate server. In other embodiments, the database is implemented using separate physical and/or virtual database server hardware that communicates with the FMS to perform the various functions described herein. In an exemplary embodiment, the database includes a database management system or other equivalent software capable of determining an optimal query plan for retrieving and providing a particular subset of the data to an instance of a virtual application. The database may alternatively be referred to herein as an on-demand database, in that the database provides (or is available to provide) data at run-time to on-demand virtual applications generated by the application platform.

In practice, the data may be organized and formatted in any manner to support the application platform. In various embodiments, the data is suitably organized into a relatively small number of large data tables to maintain a semi-amorphous "heap"-type format. The data can then be organized as needed for a particular virtual application. In various embodiments, conventional data relationships are established using any number of pivot tables that establish indexing, uniqueness, relationships between entities, and/or other aspects of conventional database organization as desired. Further data manipulation and report formatting is generally performed at run-time using a variety of metadata constructs. Metadata within a universal data directory (UDD), for example, can be used to describe any number of forms, reports, workflows, user access privileges, business logic and other constructs that are common to a user. Displays, formatting, functions and other constructs may be maintained as specific metadata for each application. Rather than forcing the data into an inflexible global structure that is common to all applications, the database is organized to be relatively amorphous, with the pivot tables and the metadata providing additional structure on an as-needed basis. To that end, the application platform suitably uses the pivot tables and/or the metadata to generate "virtual" components of the virtual applications to logically obtain, process, and present the data from the database.

The flight plan is generally determined on the ground before departure by either the pilot or a dispatcher for the owner of the aircraft. It may be manually entered into the FMS 212 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. The aircrew may use the FMS 212 to modify the plight flight plan before takeoff or even while in flight for variety of reasons. Such changes may be entered via the CDU. Once in flight, the principal task of the FMS 212 is to accurately monitor the aircraft's position. This may use a GPS, a VHF omnidirectional range (VOR) system, or other similar sensor in order to determine and validate the aircraft's exact position. The FMS 212 constantly cross checks among various sensors to determine the aircraft's position with accuracy.

Additionally, the FMS 212 may be used to perform advanced vertical navigation (VNAV) functions. The purpose of VNAV is to predict and optimize the vertical path of the aircraft. The FMS 212 provides guidance that includes control of the pitch axis and of the throttle of the aircraft. In order to accomplish these tasks, the FMS 212 has detailed flight and engine model data of the aircraft. Using this information, the FMS 212 may build a predicted vertical descent path for the aircraft. A correct and accurate implementation of VNAV has significant advantages in fuel savings and on-time efficiency.

The display device 216 is configured to display various icons, text, and/or graphical elements associated with alerts related to situations requiring user attention, wherein the situations are associated with a device or system that is separate and distinct from the computing device 200. In an exemplary embodiment, the display device 216 and the user interface 206 are communicatively coupled to the processor 202. The processor 202, the user interface 206, and the display device 216 are cooperatively configured to display, render, or otherwise convey one or more graphical representations or images associated with high-priority or critical flight situation alerts on the display device 216, as described in greater detail below. In an exemplary embodiment, the display device 216 is realized as an electronic display configured to graphically display critical flight situation alerts and associated detail, as described herein. In some embodiments, the computing device 200 is an integrated computer system onboard an aircraft, and the display device 216 is located within a cockpit of the aircraft and is thus implemented as an aircraft display. In other embodiments, the display device 216 is implemented as a display screen of a standalone, personal computing device (e.g., laptop computer, tablet computer). It will be appreciated that although the display device 216 may be implemented using a single display, certain embodiments may use additional displays (i.e., a plurality of displays) to accomplish the functionality of the display device 216 described herein.

In general, the display device system 216 may include any device or apparatus suitable for displaying flight information or other data associated with operation of the aircraft in a format viewable by a user. Display methods include various types of computer generated symbols, text, and graphic information representing, for example, pitch, heading, flight path, airspeed, altitude, runway information, waypoints, targets, obstacle, terrain, and required navigation performance (RNP) data in an integrated, multi-color or monochrome form. In practice, the display system may be part of, or include, a primary flight display (PFD) system, a panel-mounted head down display (HDD), a head up display (HUD), or a head mounted display system, such as a "near to eye display" system. The display system may comprise display devices that provide three dimensional or two dimensional images and may provide synthetic vision imaging. Non-limiting examples of such display devices include cathode ray tube (CRT) displays, and flat panel displays such as LCD (liquid crystal displays) and TFT (thin film transistor) displays. Accordingly, each display device responds to a communication protocol that is either two-dimensional or three, and may support the overlay of text, alphanumeric information, or visual symbology.

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

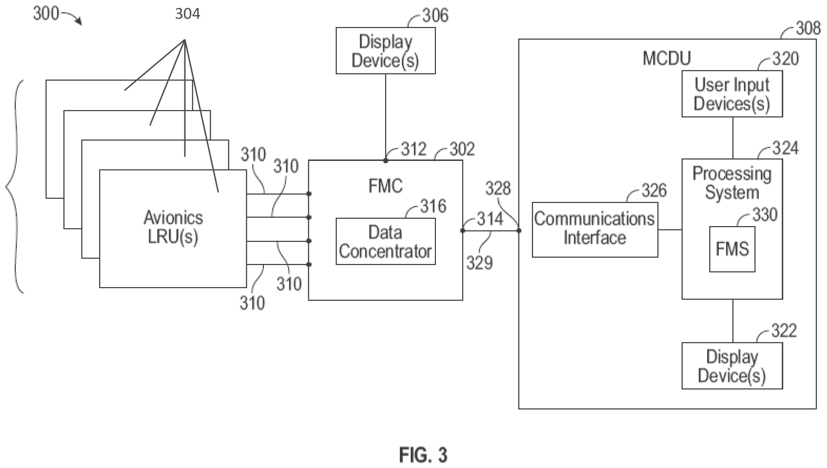

FIG. 3 depicts an exemplary embodiment of an aircraft system 300 suitable for implementation onboard an aircraft 103 shown previously in FIG. 1. The illustrated aircraft system 300 includes a flight management computing module 302 communicatively coupled to a plurality of onboard avionics LRUs 304, one or more display devices 306, and a multifunction computing module 308. It should be appreciated that FIG. 3 depicts a simplified representation of the aircraft system 300 for purposes of explanation, and FIG. 3 is not intended to limit the subject matter in any way.

The flight management computing module 302 generally represents the FMC, the FMS, or other hardware, circuitry, logic, firmware and/or other components installed onboard the aircraft and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 302, the flight management computing module 302 may alternatively be referred to herein as the FMC. The FMC 302 includes a plurality of interfaces 310 configured to support communications with the avionics LRUs 304 along with one or more display interfaces 312 configured to support coupling one or more display devices 306 to the FMC 302. In the illustrated embodiment, the FMC 302 also includes a communications interface 314 that supports coupling the multifunction computing module 308 to the FMC 302.

The FMC 302 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 302 generally includes or otherwise accesses a data storage element (or memory), which may be realized as any sort of non-transitory short or long term storage media capable of storing programming instructions for execution by the processing system of the FMC 302. In exemplary embodiments, the data storage element stores or otherwise maintains code or other computer-executable programming instructions that, when read and executed by the processing system of the FMC 302, cause the FMC 302 to implement, generate, or otherwise support a data concentrator application 316 that performs certain tasks, operations, functions, and processes described herein.

The avionics LRUs 304 generally represent the electronic components or modules installed onboard the aircraft that support navigation, flight planning, and other aircraft control functions in a conventional manner and/or provide real-time data and/or information regarding the operational status of the aircraft to the FMC 302. For example, practical embodiments of the aircraft system 300 will likely include one or more of the following avionics LRUs 304 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 310 are realized as different ports, terminals, channels, connectors, or the like associated with the FMC 302 that are connected to different avionics LRUs 304 via different wiring, cabling, buses, or the like. In this regard, the interfaces 310 may be configured to support different communications protocols or different data formats corresponding to the respective type of avionics LRU 304 that is connected to a particular interface 310. For example, the FMC 302 may communicate navigation data from a navigation system via a navigation interface 310 coupled to a data bus supporting the ARINC 424 (or A424) standard, the ARINC 629 (or A629) standard, the ARINC 422 (or A422) standard, or the like. As another example, a datalink system or other communications LRU 304 may utilize an ARINC 619 (or A619) compatible avionics bus interface for communicating datalink communications or other communications data with the FMC 302.

The display device(s) 306 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 302 via the display interface(s) 312. Similar to the avionics interfaces 310, the display interfaces 312 are realized as different ports, terminals, channels, connectors, or the like associated with the FMC 302 that are connected to different cockpit displays 306 via corresponding wiring, cabling, buses, or the like. In one or more embodiments, the display interfaces 312 are configured to support communications in accordance with the ARINC 661 (or A661) standard. In one embodiment, the FMC 302 communicates with a lateral map display device 306 using the ARINC 702 (or A702) standard.

In exemplary embodiments, the multifunction computing module 308 is realized as a multifunction control and display unit (MCDU) that includes one or more user interfaces, such as one or more input devices 320 and/or one or more display devices 322 (shown previously as 106 in FIG.1), a processing system 324, and a communications module 326. The MCDU 308 generally includes at least one user input device 320 that is coupled to the processing system 324 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 322 may be realized as any sort of monitor, screen, LCD, LED display, or other suitable electronic display capable of graphically displaying data and/or information under control of the processing system 324.

The processing system 324 generally represents the hardware, circuitry, logic, firmware and/or other components of the MCDU 308 configured to perform the various tasks, operations, functions and/or operations described herein. Depending on the embodiment, the processing system 324 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 324, or in any practical combination thereof. In this regard, the processing system 324 includes or accesses a data storage element (or memory), which may be realized using any sort of non-transitory short or long term storage media, and which is capable of storing code or other programming instructions for execution by the processing system 324. In exemplary embodiments described herein, the code or other computer-executable programming instructions, when read and executed by the processing system 324, cause the processing system 324 to implement with an FMS 330 (shown previously as 104 in FIG.1) additional tasks, operations, functions, and processes described herein.

The communications module 326 generally represents the hardware, module, circuitry, software, firmware and/or combination thereof that is coupled between the processing system 324 and a communications interface 328 of the MCDU 308 and configured to support communications between the MCDU 308 and the FMC 302 via an electrical connection 329 between the MCDU communications interface 328 and the FMC communications interface 314. For example, in one embodiment, the communications module 326 is realized as an Ethernet card or adapter configured to support communications between the FMC 302 and the MCDU 308 via an Ethernet cable 329 provided between Ethernet ports 314, 328. In other embodiments, the communications module 326 is configured to support communications between the FMC 302 and the MCDU 308 in accordance with the ARINC 429 (A429) standard via an A429 data bus 339 provided between A439 ports 314, 338 of the respective modules 303, 308. In yet other embodiments, the communications module 336 is configured to support communications between the FMC 303 and the MCDU 308 in accordance with the ARINC 433 (A433) standard via an A433 data bus 339 provided between A433 ports 314, 338 of the respective modules 303, 308. In yet other embodiments, the communications module 336 is configured to support communications between the FMC 303 and the MCDU 308 in accordance with the ARINC 739 (A739) standard via an A739 data bus 339 provided between A739 ports 314, 338 of the respective modules 303, 308.

In various embodiments, the FMC 303 and MCDU 308 communicate using a different communications protocol or standard than one or more of the avionics LRUs 304 and/or the display devices 306. In such embodiments, to support communications of data between the MCDU 308 and those LRUs 304 and/or display devices 306, the data concentrator application 316 at the FMC 303 converts data from one format to another before retransmitting or relaying that data to its destination. For example, the data concentrator application 316 may convert data received from an avionics LRU 304 to the A439 or Ethernet format before providing the data to the MCDU 308, and vice versa. Additionally, in exemplary embodiments, the FMC 303 validates the data received from an avionics LRU 304 before transmitting the data to the MCDU 308. For example, the FMC 303 may perform debouncing, filtering, and range checking, and/or the like prior to converting and retransmitting data from an avionics LRU 304.

It should be noted that although the subject matter may be described herein in the context of the multifunction computing module 308 being realized as an MCDU, in alternative embodiments, the multifunction computing module 308 could be realized as an electronic flight bag (EFB) or other mobile or portable electronic device. In such embodiments, an EFB capable of supporting an FMS 330 application may be connected to an onboard FMC 303 using an Ethernet cable 339 to support flight management functionality from the EFB in an equivalent manner as described herein in the context of the MCDU.

In one or more embodiments, the MCDU 308 stores or otherwise maintains programming instructions, code, or other data for programming the FMC 303 and transmits or otherwise provides the programming instructions to the FMC 303 to update or otherwise modify the FMC 303 to implement the data concentrator application 316. For example, in some embodiments, upon establishment of the connection 339 between modules 303, 308, the MCDU 308 may automatically interact with the FMC 303 and transmit or otherwise provide the programming instructions to the FMC 303, which, in turn, executes the instructions to implement the data concentrator application 316. In some embodiments, the data concentrator application 316 may be implemented in lieu of flight management functionality by the MCDU 308 reprogramming the FMC 303. In other embodiments, the FMC 303 may support the data concentrator application 316 in parallel with flight management functions. In this regard, the FMC 303 may perform flight management functions, while the FMS 330 application on the MCDU 308 supplements the flight management functions to provide upgraded flight management functionality within the aircraft system 300.

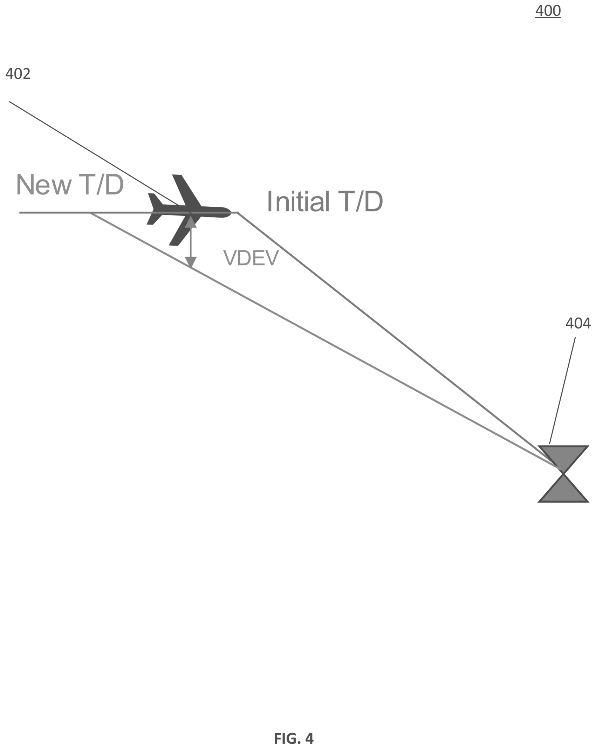

Present embodiments propose a philosophy of energy handling that does not lead pilots along the descent path. Instead, it gives them awareness about the critical point beyond which they cannot make the descent stable without adding additional miles to the flight path, but otherwise it lets them perform flight on their own. The disclosed embodiments would support pilots with proper energy awareness and reduce unstable landings and go arounds FIG. 4 depicts a diagram 400 of a descent path for an aircraft 402 with a proposed change in accordance with the disclosed embodiments. The proposed shortcut for the initial top of descent (T/D) flight path is set into the FMS of the aircraft. Since the aircraft is above the proposed vertical deviation (VDEV) is greater than zero, the pilot has to evaluate whether the constraints of the proposed flight path changes can be safely met. The pilot may then accept or reject the proposed changes to the flight plan (FPLN).

The goal is to provide the pilot with information if the aircraft is able to perform safe landing *(i.e.,* be stable at a predefined gate, above ground level (AGL) or at a final approach fix (FAF). This requires to be able to descent, meet all the constraint of the flown procedure and (or alternatively, if there are no constrains in the procedure at least) be in predefined limits at FAF 404. To meet these requirements, the FMS would provide pilot with a precomputed point which is the last point projected on the current flight path vector (FPV) where the pilot needs to initiate descent in a defined braking configuration.

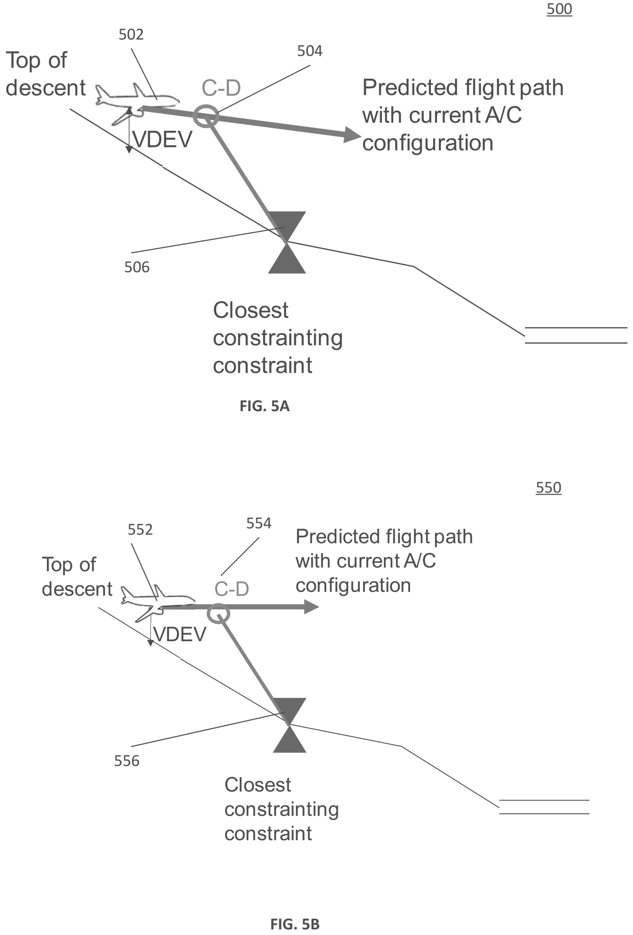

FIGS. 5A and 5B depict diagrams 500 and 550 of a critical descent path and a critical descent path overshoot for an aircraft with a critical descent point in accordance with the disclosed embodiments. In the attached figures, the C-D point 504 and 554 represents this critical descent point. The critical descent point 504 and 554 is a limiting profile segment, which considers maximal drag configuration (per aircraft type) and which ensures compliance with constraints 506 and 556 and stability at final approach fix (FAF). The computations of the critical descent point 504 and 554 may be done during the aircraft 502 descent (shown in FIG. 5A) and also while the aircraft 552 is at cruising altitude (shown in FIG. 5B). The computaions are made using and adjusting existing FMS algorithms. A backward computation is made from the closest constraint 506 and 556 and intersected with forward predictions of the flight path to determine the critical descent point.

The system may use the existing architecture of the FMS, but additional algorithms may have to be implemented to secure the computation of multiple descent paths and determining the critical descent flight path limit. This invention also adds new features shown to that pilot on a navigation display, vertical situation display (VSD) or flight plan page. Determination of critical top of descent path 508 helps the pilot to evaluate the flyability of the procedure. Moreover, disclosed method is very simple to understand for the pilot and represents the flyability of the procedure in a clear and transparent manner.

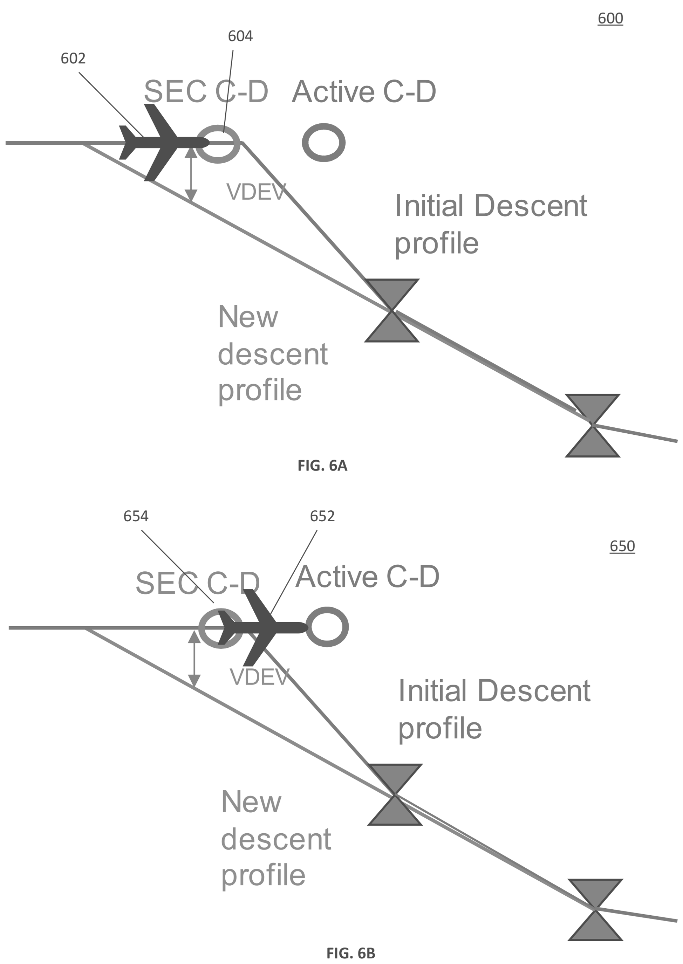

FIGS. 6A and 6B depict diagrams 600 and 650 of an accepted and rejected critical descent path for an aircraft with a critical descent point in accordance with the disclosed embodiments. In FIG. 6A, the C/D point 604 is ahead of the aircraft 602, so the pilot may accept the proposed FPLN change. In contrast, FIG. 6B shows the C/D point 654 is behind the aircraft 652, so the pilot should reject the proposed FPLN change. Other embodiments are depicted on the navigation display, vertical situation display, MCDU flight plan page, primary flight display (PFD) (*e.g.,* in form of count down to meet the point, etc.) With this information, pilot is able to evaluate situation also in case there is a larger vertical deviation between the current aircraft position and the descent path.

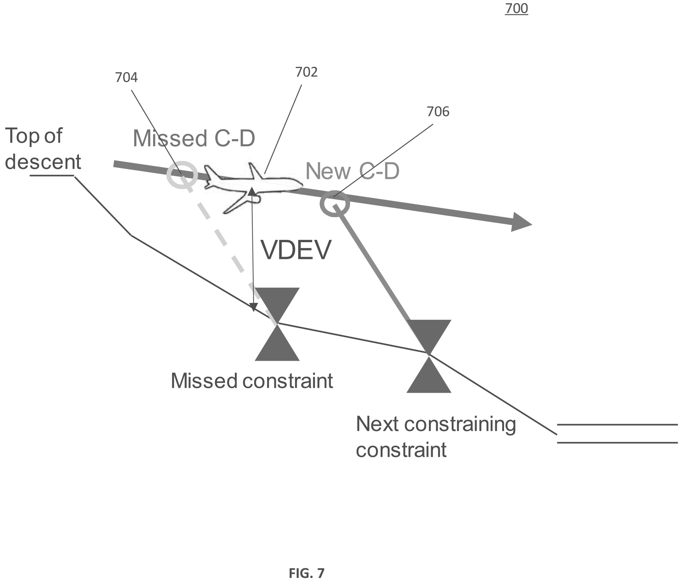

FIG. 7 depicts a diagram 700 of a critical descent path with a missed critical descent point 704 and new critical descent point 706 in accordance with the disclosed embodiments. As previously discussed, critical descent flight path limit is computed and displayed for the pilot in order to evaluate flyability. If the C/D is in front of the aircraft, pilot knows it is possible to comply with the constraints and perform stable approach. If the point 704 is behind the aircraft 702, it is not physically possible to descend and slow down enough without flying additional miles. In this case, a new critical descent point 706 is constructed for next constraining constraint or FAF. These computations take into account the maximum braking capability of the aircraft. Alternatively, the user can define different limits, (e.g. restrict using no more than half speed brakes), but it has to respect aircraft standard operations.

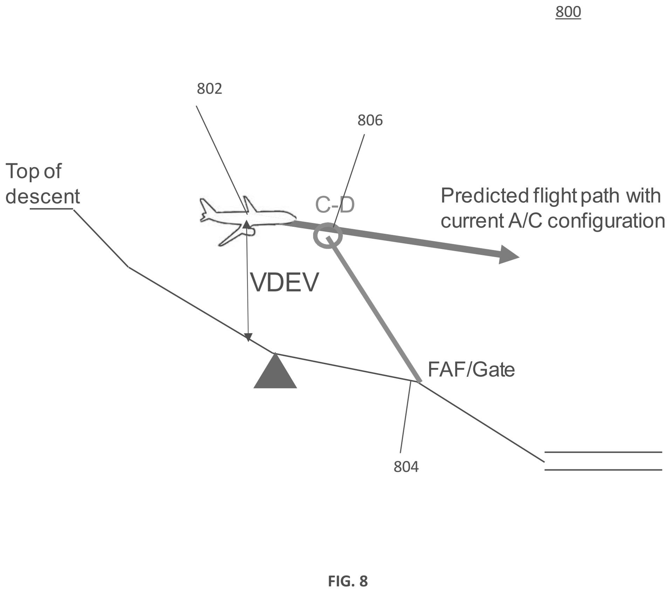

FIG. 8 depicts a diagram 800 of a critical descent path for an aircraft 802 with a critical descent point 806 using FAF/gate 804 stability focus in accordance with the disclosed embodiments. The C/D point 806 could be computed with benefit for FAF/gate 804 stability monitoring because it is not a common constraint. For this emboidment, apart from airbrakes, landing gear may be considered (apart from airbrakes) in the computation. Additionally, when C/D point focuses on FAF/gate 804, C/D indicator should provide a notification to the pilot.

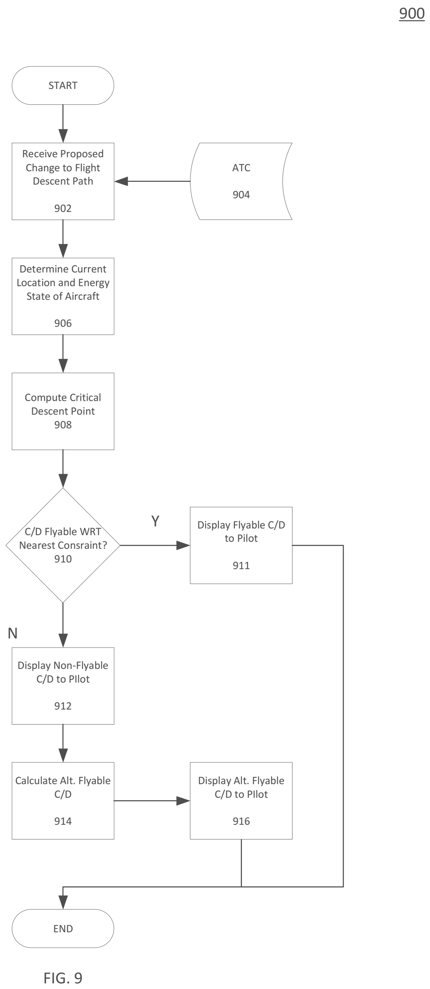

Figure 9 shows a flowchart 900 for method for determining a critical descent flight path limit for an aircraft has been developed. First, a proposed change to a flight path descent path for an aircraft is received 902 from air traffic control (ATC) 904. The current location and current energy state of the aircraft is determined 906 by a flight management system (FMS) of the aircraft. The current energy state of the aircraft is the aircraft's current altitude and speed. A critical descent point (C/D) is computed with the FMS 908 based on the flight plan change from the ATC. Each modified flight descent path is categorized as flyable or unflyable 910 with the FMS. A flyable C/D is displayed to the pilot 911 while a non-flyable C/D is also displayed 912. If the C/D is non-flyable, an alternative C/D is computed which is flyable 614. The alternative C/D is then displayed to the pilot 916.

The main differentiator is the disclosed embodiments of flight procedure analysis during the flight and decreasing pilot workload. Proposed solution works on the principle of computation of descent path profile, which complies with the constraints (e.g., speed and altitude) at defined waypoints and also checks the flyability of computed segments (also proposes speed brake extension for steeper segments such as airbrakes in a maximum allowed drag configuration). Set of these descent path profiles would be computed in FMS based on the closest altitude constraints and respecting speed constraints in order to find the critical descent flight path limit. Number of these descent paths could be optimized during the design process to secure fast computations. After the set of descent paths is computed, system evaluates flyability of these descent paths and if there is such descent path, which is not flyable the system declares the closest descent path as critical and its top of descent is shown as critical to the pilot on the navigation display and also on the secondary flight plan page of MCDU/MFD, PFD or HUD.

Existing flight management system (FMS) would have to be enhanced with the algorithm which would evaluate the flyability of the descent profiles based on the flight path angle of the segments, missed constraints or vertical deviation at the gate or FAF. In order to secure the vertical deviation, an altitude pseudo-constraint may be added to final approach fix waypoints or gate. In some operational embodiments, the pilot receives the proposals of procedure change from ATC and then observes this procedure change on the secondary flight plan page, so he can analyze it as an alternative to active flight plan and compare it. For the given procedure change, critical top of descent would be computed and shown on the secondary flight plan page as a pseudo-waypoint with predictions and also on the navigation display and vertical situation display as the critical top of descent sign. The pilot would then evaluate the flyability of the proposed flight plan change based on the critical top of descent shown to him on the navigation display. If the critical top of descent was behind the aircraft present position, this shortcut would be automatically not flyable. In this case, critical descent path would be constructed with respect to the next constraining constraint or FAF. If the critical top of descent was ahead of the aircraft current position, descending before this critical top of descent is flyable. Then, pilot may activate the secondary flight plan with the procedure change and then the new descent path is computed, so the pilot may follow it either manually or in the managed mode (autopilot).

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for determining a critical descent flight path limit for an aircraft, comprising:
receiving a proposed change to a flight path descent path for an aircraft, where the proposed change is received from air traffic control (ATC);
determining a current location and current energy state of the aircraft, where the current energy state of the aircraft comprises the aircraft's current altitude and speed as determined by a flight management system (FMS) of the aircraft;
computing multiple modified flight descent paths with the FMS to comply with the closest constraint for the proposed change from the ATC;
categorizing each modified flight descent path as flyable or unflyable with the FMS; and
notifying a pilot of the aircraft of each modified flight descent path.

2. The method of Claim 1, where the modified flight descent paths are categorized as flyable if the modified flight descent path can be safely executed by the aircraft.

3. The method of Claim 1, where the modified flight descent paths are categorized as flyable if the aircraft is able to safely land at a specified destination.

4. The method of Claim 3, where safely landing comprises the aircraft flying within predetermined performance limits at a final approach fix (FAF).

5. The method of Claim 3, where the modified flight descent paths are categorized as flyable while considering the use of air brakes by the aircraft.

6. The method of Claim 5, where the use of air brakes by the aircraft comprise maximum allowed drag configuration.

7. The method of Claim 5, where the use of air brakes by the aircraft comprises a predetermined limit of air brake capability.

8. The method of Claim 1, further comprising:
identifying a flyable modified flight descent path that is closest to an unflyable modified flight descent path; and
labeling the last possible modified flight descent path as a critical descent point, where the critical descent point is the last point at which the aircraft may safely land at a specified destination.

9. The method of Claim 8, where the critical descent point is determined based on constraints of performance characteristics of the aircraft and flight descent path.

10. The method of Claim 8, where the critical descent point is determined based on stability of a final approach fix (FAF).

11. The method of Claim 8, where the critical descent point is displayed as an identified waypoint to the pilot on a flight display.

12. The method of Claim 8, further comprising:
displaying a warning to the pilot if the aircraft has passed the critical descent point.

13. The method of Claim 12, further comprising:
labeling an alternative critical descent point if the aircraft has passed the critical descent point.

14. A system for determining a critical descent flight path limit for an aircraft, comprising:
a flight management system (FMS) located onboard the aircraft, where the FMS,
receives a proposed change to a flight path descent path for an aircraft, where the proposed change is received from air traffic control (ATC),
determines a current location and current energy state of the aircraft, where the current energy state of the aircraft comprises the aircraft's current altitude and speed as determined by the FMS,
computes multiple modified flight descent paths with the FMS to find a critical descent flight path limit, which complies with the proposed change from the ATC,
categorizes each modified flight descent path as flyable or unflyable with the FMS; and
a flight display system located onboard the aircraft, where the flight display system notifies a pilot of the aircraft of each modified flight descent.

15. The system of Claim 14, further comprising, where the FMS:
identifies a flyable modified flight descent path that is closest to an unflyable modified flight descent path, and
labels the flyable modified flight descent path that is closest to an unflyable modified flight descent path as a critical descent point, where the critical descent point is the last point at which the aircraft may safely land at a specified destination.
